# DEMANDE DE BREVET EUROPEEN

(11) **EP 4 579 531 A1**
(43) Date de publication de la demande: **02.07.2025**
(21) Numéro de dépôt: 24223295.7
(22) Date de dépôt: 26.12.2024
(51) Int. Cl.: G06N 3/0499, G06N 3/10, G06N 20/00

(54) **SYSTÈME INFORMATIQUE, PROCÉDÉ DE MISE EN OEUVRE ET ENSEMBLE DE PRODUITS PROGRAMME D'ORDINATEUR ASSOCIÉS**

(30) Priorité: 26.12.2023 FR 2315293
(71) Demandeur: THALES, 92190 Meudon (FR)
(72) Inventeur: DU MAS DES BOURBOUX, Hélion, 78995 ELANCOURT CEDEX (FR); BRAULT, Romain, 91767 PALAISEAU CEDEX (FR)
(74) Mandataire: Lavoix

(57) **Abrégé**

La présente invention concerne un système informatique (10) comprenant une unité de stockage (25) propre à recevoir, depuis un premier système externe (15), un modèle d'intelligence artificielle, dit modèle à tester (35), et propre à stocker le modèle à tester (35). Le modèle à tester (35) est un modèle de classification propre à classer une donnée d'entrée parmi une pluralité de classes distinctes,

Le système informatique (10) comprend en outre une unité de traitement (30) propre à recevoir, depuis un deuxième système externe (25), une requête (37) d'évaluation de la robustesse du modèle à tester (35). L'unité de traitement (30) est propre à évaluer au moins un indicateur quantifiant la robustesse du modèle à tester (35), et à envoyer, au deuxième système externe (30) le ou chaque indicateur quantifiant la robustesse évaluée.

L'unité de stockage (25) et l'unité de traitement (30) sont distinctes.

## Description

La présente invention concerne un système informatique.

La présente invention concerne également un ensemble de produits programmes d'ordinateur.

La présente invention concerne le domaine des systèmes de stockage et de traitement pour des modèles d'intelligence artificielle.

Les modèles d'intelligence artificielle sont des modèles conçus par des développeurs comprenant des paramètres réglables. Avant de rendre un tel modèle opérationnel, il est connu de lui appliquer un apprentissage, aussi appelé entrainement, au cours duquel les paramètres réglables dudit modèle sont réglés pour accomplir une tâche prédéfinie, formant ainsi un modèle entraîné.

Cependant, dans un contexte industriel, le développement du modèle et son apprentissage ne sont pas nécessairement réalisés par les mêmes acteurs. Dans un tel contexte, le modèle est souvent découpé en briques élémentaires et chaque acteur ne travaille que sur la brique élémentaire qui lui est propre. En outre, une fois le modèle entrainé, les utilisateurs dudit modèle sont en pratique d'autres acteurs encore.

Ainsi, plusieurs acteurs interviennent sur un modèle d'intelligence artificielle, pour garantir son opérabilité, i.e. sa capacité à accomplir une tâche voulue, et pour son utilisation.

En outre, au cours de son cycle de vie, le modèle est voué à évoluer, pour améliorer sa performance et/ou prendre en compte de nouvelles contraintes des utilisateurs du modèle.

Dans une telle situation, il est préférable que le modèle d'intelligence artificielle soit stocké sur un système informatique accessible à tous les acteurs pour accomplir ses tâches respectives vis-à-vis du modèle.

Toutefois, un tel système informatique n'est pas apte à garantir la sécurité du modèle car il est accessible à tous les acteurs. Ainsi, chaque acteur est en mesure de connaître l'intégralité des composantes du modèle qui devient alors sujet à des attaques extérieures.

Une solution garantissant la sécurité du modèle tout au long de son cycle de vie est nommé MLSecOps. Cette technologie propose un environnement de travail pour chaque acteur du modèle, et une segmentation des actions de chaque acteur, ainsi qu'un horodatage des modifications effectués par chaque acteur. Aussi, en cas d'attaque d'une brique élémentaire traité par un acteur, le modèle entier n'est pas largement impacté puisqu'il suffit de revenir à la version antérieure de cette brique sans qu'il n'y ait d'incidence majeure sur les autres briques élémentaires.

Alors que la technologie MLSecOps garantie la sécurité du modèle tout au long de son cycle de vie, cette technologie ne s'intéresse pas à la confiance accordable intrinsèquement au modèle, aussi appelé robustesse dans la présente demande. Autrement dit, la technologie MLSecOps garantie que le modèle n'est vérolé à aucune étape de son cycle mais ne présume de la robustesse initiale du modèle, ni de l'influence de modifications sur ladite robustesse dudit modèle.

Un exemple de deux modèles ayant des niveaux de confiance différents est illustré par la suite.

Par exemple, pour un modèle de classification entre N classes, le comportement dudit modèle lors du traitement d'une donnée ne correspondant à aucune des N classes, est imprévisible.

Par la suite considérons deux modèles destinés à classer une donnée d'entrée par les mêmes N classes et auquel on fournit une donnée ne correspondant à aucune de ces N classes.

Par exemple, le premier modèle renvoie un résultat peu concluant. Autrement dit, le modèle évalue que la probabilité que la donnée appartienne à chaque classe, comme sensiblement identique.

Par exemple toujours, le deuxième modèle renvoie un résultat très concluant. Autrement dit, le modèle évalue la probabilité que la donnée appartienne à une classe spécifique comme très élevée comparé aux autres classes.

Avec le deuxième modèle, il est alors impossible de détecter, à partir des probabilités fournit en sortie, que la donnée à classer ne correspond à aucune des classes prédéfinies.

Il est donc clair que la confiance accordable au premier modèle est intrinsèquement plus grande que celle accordable au deuxième modèle. Autrement dit, le premier modèle est plus robuste que le deuxième.

Il existe donc un besoin pour un système informatique permettant d'évaluer, tout au long du cycle de vie d'un modèle d'intelligence artificielle, la robustesse dudit modèle.

A cet effet, la présente demande a pour objet un système informatique comprenant :
- une unité de stockage propre à recevoir, depuis un premier système externe, un modèle d'intelligence artificielle, dit modèle à tester, et propre à stocker le modèle à tester, le modèle à tester étant un modèle de classification propre à classer une donnée d'entrée parmi une pluralité de classes distinctes,
- une unité de traitement propre à recevoir, depuis un deuxième système externe, une requête d'évaluation de la robustesse du modèle à tester,

l'unité de traitement étant propre à évaluer au moins un indicateur quantifiant la robustesse du modèle à tester, et à envoyer, au deuxième système externe le ou chaque indicateur quantifiant la robustesse évaluée,
l'unité de stockage et l'unité de traitement étant distincte.

Grâce à l'unité de traitement, distincte de l'unité de stockage, un tiers est apte à obtenir, via le deuxième système informatique, un indicateur quantifiant la robustesse du modèle sans avoir nécessairement accès au modèle lui-même.

Selon des modes de réalisation spécifiques, le système selon l'invention comprend les caractéristiques suivantes, prises isolément ou suivant toutes les combinaisons techniquement possibles :
- l'unité de traitement est propre à fournir, au deuxième système externe, uniquement le ou les indicateurs quantifiant la robustesse évaluée ;
- l'unité de stockage stocke en outre un modèle d'attaque destiné à altérer la classification du modèle à tester,
   le ou au moins un indicateur quantifiant la robustesse du modèle à tester étant un nombre d'itération nécessaire au modèle d'attaque pour altérer la classification du modèle à tester ;
- l'unité de stockage stocke un modèle d'évaluation d'une valeur de confiance avec laquelle le modèle à tester classe la ou chaque donnée d'entrée qu'il est propre à classer,
   et l'unité de stockage stocke en outre une base de données, la base de données comprenant des données d'entrée destinées à être fournies au modèle à tester et, pour chaque données d'entrée, une classe associée,
   le ou au moins un indicateur quantifiant la robustesse du modèle à tester étant un pourcentage de données de la base de données pour laquelle la valeur de confiance évaluée par la modèle de confiance est inférieure à un seuil prédéfini, dit seuil de confiance ;
- l'unité de stockage stocke en outre une base de données, la base de données comprenant des données d'entrée destinées à être fournit au modèle à tester et, pour chaque données d'entrée, une classe associée,
   au moins une partie des données de la base de données, dites données en dehors de la distribution, étant associées à une classe distincte des classes que le modèle à tester est propre à déterminer,
   le ou au moins un indicateur quantifiant la robustesse du modèle à tester étant un pourcentage de données en dehors de la distribution classées par le modèle à tester dans une classe respective avec une valeur de confiance supérieure à un seuil prédéfini, dit seuil OOD ;
- l'unité de traitement est propre à, suite à la réception de la requête depuis le deuxième système externe, obtenir le modèle à tester depuis l'unité de stockage, l'unité de traitement est propre à ensuite évaluer le ou chaque indicateur quantifiant la robustesse du modèle à tester par application d'un traitement au modèle à tester ;
- le modèle à tester est un modèle à réseau(x) de neurones comprenant plusieurs couches de neurones, chaque neurones d'une couche étant relié à chaque autre neurones de la couche suivante par une connexion comportant un poids synaptique, le modèle à tester comprenant en outre des métadonnées,
   l'unité de traitement étant, lors de l'obtention du modèle à tester, propre à obtenir uniquement les poids synaptiques du modèle à réseau de neurones depuis l'unité de stockage ;
- l'unité de stockage est propre à identifier le premier système externe,
   l'unité de stockage étant propre à recevoir, depuis le premier système externe et uniquement après identification, un mise à jour du modèle à tester,
   l'unité de stockage étant propre à stocker la mise à jour du modèle à tester ; et
- le système informatique est dans une environnement nuagique.

La présente invention a également pour objet un procédé de mise en oeuvre d'un tel système informatique, comprenant une phase de stockage mise en oeuvre par l'unité de stockage et comportant les étapes suivantes :
- réception du modèle à tester depuis le premier système externe,
- stockage, dans l'unité de stockage du modèle à tester reçu depuis le premier système externe,
le procédé comprenant en outre une phase de traitement mise en oeuvre par l'unité de traitement, et comportant les étapes suivantes :
- réception de la requête d'évaluation de la robustesse du modèle à tester,
- évaluation d'au moins un indicateur quantifiant la robustesse du modèle à tester, et
- envoi, au deuxième système externe, du ou des indicateurs quantifiant la robustesse évaluées.

La présente invention a également pour objet un ensemble de produits programmes d'ordinateur comprenant des instructions logicielles, qui lorsqu'elles sont exécutés, mettent en oeuvre une tel procédé.

D'autres caractéristiques et avantages de l'invention apparaîtront à la lecture de la description qui suit de modes de réalisation de l'invention, donnés à titre d'exemple uniquement et en référence aux dessins qui sont :
- la figure 1 est une représentation schématique d'un système informatique selon l'invention, et
- la figure 2 est un organigramme d'un procédé de mise en oeuvre du système informatique de la figure 1.

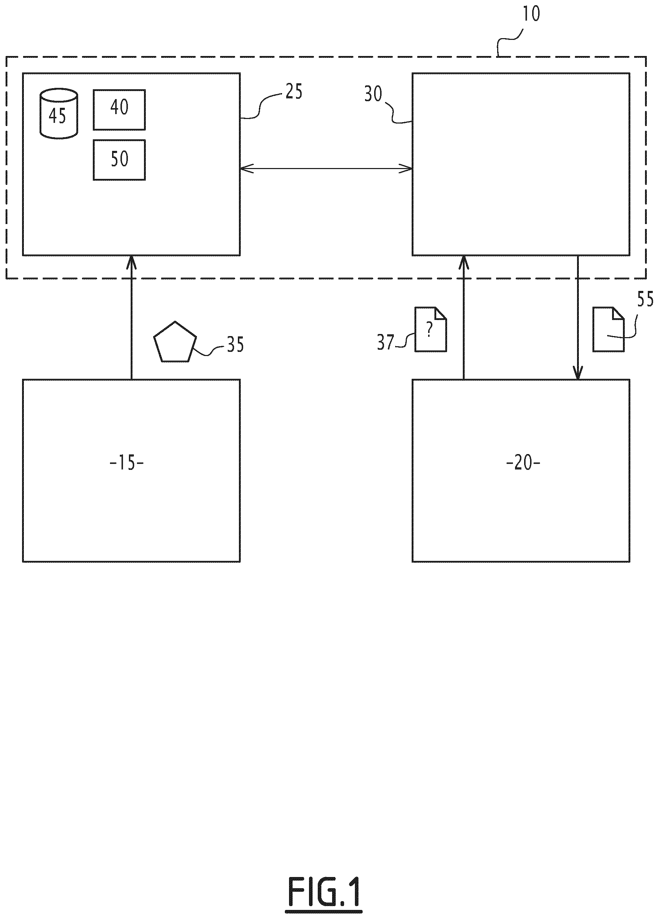

Sur la figure 1 est représenté un système informatique 10 selon l'invention. Sur la figure 1 sont également représentés un premier système externe 15 et un deuxième système externe 20 interagissant respectivement avec le système informatique 10.

Le premier système externe 15 est par exemple un ordinateur utilisé par un développeur de modèles d'intelligence artificielle. Le premier système externe 15 est propre à fournir, au système informatique 10, un modèle d'intelligence artificielle, dit modèle à tester 35 ou une mise à jours de ce modèle 35.

Le deuxième système externe 20 est par exemple ordinateur utilisé par un utilisateur de modèles, un développeur de modèles, ou une organisation tierce. Le deuxième système externe 20 est propre à envoyer au système information une requête 37 d'évaluation de la robustesse du modèle à tester 35, et à recevoir de ce dernier au moins un indicateur quantifiant la robustesse du modèle, comme il sera décrit ci-après.

Préférentiellement, le système informatique 10 est dans un environnement nuagique (de l'anglais, *cloud*). Autrement dit, le système informatique 10 est préférentiellement stocké sur des serveurs informatiques à distance des premiers 15 et deuxièmes 20 systèmes externes, et hébergés sur internet pour stocker, gérer et traiter des données, plutôt qu'un serveur local ou un ordinateur personnel.

Le système informatique 10 comprend une unité de stockage 25 et une unité de traitement 30 distinct l'un de l'autre.

L'unité de stockage 25 est par exemple supportée par une plateforme AWS^{®}, Azuré^{®}, MinIO^{®}, ou GCP^{®}.

L'unité de stockage 25 est propre à recevoir, depuis le premier système externe 15, au moins un modèle à tester 35.

A cet effet, préférentiellement, le premier système externe 15 interagit avec l'unité de stockage 25 via une solution client de service nuagique (de l'anglais, *service cloud*), telle que AWS cli^{®}, firefox^{®}, ou prefect^{®}.

Comme décrit ci-dessus, chaque modèle d'intelligence artificiel comprend des paramètres réglables. Préférentiellement, le modèle à tester 35 est déjà entraîné, i.e. ses paramètres réglables sont déjà réglés.

Par exemple, le modèle à tester 35 est un modèle de classification propre à classer, une donnée d'entrée parmi N classes prédéfinies et respective du modèle à tester 35. N est préférentiellement supérieur ou égal à 2.

Par exemple le modèle à tester 35 est un modèle à réseau(x) de neurones. Autrement dit, le modèle à tester 35 comprend au moins un réseau de neurones.

Le réseau de neurones comporte une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives. Dans certains cas, le poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

En complément facultatif, chaque neurone est également apte à appliquer, en outre, un facteur multiplicatif, également appelé biais, à la sortie de la fonction d'activation, et la valeur délivrée en sortie dudit neurone est alors le produit de la valeur de biais et de la valeur issue de la fonction d'activation.

Un réseau de neurones à convolution est aussi parfois dénommé réseau de neurones convolutif ou par le sigle CNN qui renvoie à la dénomination anglaise de *« Convolutional Neural Networks ».*

Dans un réseau de neurones à convolution, chaque neurone d'une même couche présente exactement le même schéma de connexion que ses neurones voisins, mais à différentes positions d'entrée. Le motif de connexion est appelé noyau de convolution ou, plus souvent, « *kernel* » en référence à la dénomination anglaise correspondante.

Une couche de neurones entièrement connectée est une couche dans laquelle les neurones de ladite couche sont chacun connectés à tous les neurones de la couche précédente.

Un tel type de couche est plus souvent dénommé selon le terme anglais de « *fully connected* », et parfois désigné sous la dénomination « couche dense ».

Dans un tel cas, les paramètres réglables du modèle sont les poids synaptiques du ou des réseaux de neurones.

L'unité de stockage 25 est en outre propre à stocker le ou chaque modèle à tester 35.

Préférentiellement, lorsque le modèle à tester 35 est un modèle à réseau de neurones, l'unité de stockage 25 est propre à stocker les poids synaptiques sous le formalisme ONNX^{™} permettant de stocker de manière particulièrement compacte les poids synaptiques de réseaux de neurones.

Préférentiellement, le modèle à tester 35 comprend en outre des métadonnées (de l'anglais, *metadata*) telles qu'un numéro de version du modèle à tester 35, un ou plusieurs commentaires du développeur ayant développé le modèle à tester 35 ou un identifiant du développeur.

Préférentiellement, l'unité de stockage 25 stocke en outre un modèle d'attaque 40 de modèle à tester 35. Un tel modèle d'attaque 40 est connu sous le nom anglais d'adversarial attack model.

Par exemple, le modèle d'attaque 40 est un modèle du type « evasion ». Un tel modèle est par exemple configuré pour générer des données d'entrée du modèle à tester 35, en partant d'une données d'entrée que le modèle à tester 35 classe correctement et modifiant, au fur et à mesure, la donnée d'entrée jusqu'à ce que le modèle à tester 35 la classe de manière erronée.

Préférentiellement, l'unité de stockage 25 stocke en outre base de données 45, la base de données 45 comprenant des données d'entrée destinées à être fournies au modèle à tester 35 et, pour chaque données d'entrée, une classe associée.

Parmi les classes présentes dans la base de données 45, certaines font parties des N classes que le modèle à tester 35 est propre à déterminer, et d'autres classes n'en font pas partie. Les données d'entrée compris dans la base de données 45 et associé à une autre classe qu'une des N classes du modèle à tester 35, sont appelés données en dehors de la distribution, ou données OOD (de l'anglais, *Out-Of Distribution).* Cette dénomination vient du fait que le modèle à tester 35 n'est pas entrainé pour classer ce type de données.

Dans l'exemple selon lequel le modèle à tester 35 serait propre à classer des images représentant des aéronefs en une pluralité de classe représentant respectivement une référence d'aéronef, une donnée OOD serait par exemple une image d'un oiseau ou d'une table.

La base de données 45 stockée dans l'unité de stockage provient par exemple du premier système externe 15 et est reçue avant le modèle à tester 35. En variante, la base de données 45 était déjà stockée dans le l'unité de stockage 25.

Optionnellement, l'unité de stockage 15 stocke en outre un modèle d'évaluation 50 propre à évaluer, lorsque le modèle à tester 35 traite une donnée d'entrée, la confiance avec laquelle le modèle à tester 35 la classe dans une des N classes. Le modèle d'évaluation 50 est par exemple tel que décrit dans l'article « TrustGAN: Training safe and trustworthy deep learning models through generative adversarial networks » de du Mas des Bourboux H., par exemple trouvable à l'adresse internet suivante : https://arxiv.org/abs/2211.13991v1

Optionnellement, le module de stockage 25 est propre à identifier la premier système externe 10, par exemple en recevant une combinaison : identifiant/mot de passe.

Lorsque le modèle à tester 35 est déjà stocké dans l'unité de stockage 25, cette dernière est en outre propre à recevoir, depuis le premier système externe 15 et seulement suite à son identification, une mise à jour du modèle à tester 35. L'unité de stockage 25 est alors propre à stocker la mise à jour, i.e. le modèle 35 mise à jour.

L'unité de traitement 30 utilise par exemple des conteneurs, permettant d'isoler chaque chaque fonction qui sera décrite ci-après, formant ainsi un microservice.

A titre d'exemple, les conteneurs sont du type Docker^{®}, ou Podman^{®}. Afin d'assurer une cohésion entre les micro services pour réaliser des tâches requérant plusieurs microservices, l'unité de traitement 30 utilise par exemple la suite de développement Kubernetes^{®}. En alternative ou en complément, l'unité de traitement 30 utilise la suite de développement Seldon^{®}, Dataiku^{®}, ou autre. Ces dernières fournissent en outre des briques de sécurité d'intelligence artificielle et la possibilité de créer des solutions du type MLSecOps.

L'unité de traitement 30 est propre à recevoir, depuis le deuxième système externe 20, la requête 37 d'évaluation de la robustesse du modèle à tester 35.

Par exemple, la requête 37 requiert l'évaluation d'au moins un indicateur quantifiant la robustesse, de préférence parmi :
- un indicateur de vulnérabilité du modèle à tester 35 ;
- un indicateur de précision du modèle à tester 35 ;
- un indicateur de confiance dans la classification par le modèle à tester 35 ; et
- un indicateur de traitement des données OOD par le modèle à tester 35.

L'unité de traitement 30 est propre à obtenir le modèle à tester 35 depuis l'unité de stockage 25. L'unité de traitement 30 est propre à ensuite évaluer le ou chaque indicateur quantifiant la robustesse par application d'un traitement au modèle à tester 35.

A cet effet, l'unité de traitement 30 est préférentiellement propre à obtenir uniquement les poids synaptiques du modèle à réseau de neurones depuis l'unité de stockage 25. Autrement dit, l'unité de traitement 30 n"obtient pas, depuis l'unité de stockage 25, les métadonnées du modèle.

En outre ou en alternative, si au moins un indicateur quantifiant la robustesse est l'indicateur de vulnérabilité, l'unité de traitement 30 est propre à obtenir en outre le modèle d'attaque 40. L'unité de traitement 30 est ensuite propre à itérer des attaques du modèle à tester 35 à partir du modèle d'attaque 40, selon le type du modèle d'attaque 40. L'indicateur de vulnérabilité du modèle à tester 35 est alors le nombre d'itération nécessaire au modèle d'attaque 40 pour altérer la classification du modèle à tester 35.

Par exemple, si le modèle d'attaque 40 est du type « evasion », le modèle d'attaque 40 détermine à partir d'une donnée d'entrée du modèle à tester 35, une faible variation de ladite donnée d'entrée pour former une donnée modifiée et vérifie si le modèle à tester 35 classe toujours la donnée modifiée dans la même classe que la donnée d'entrée. Si tel est le cas, le modèle d'attaque 40 modifie de plus en plus la donnée d'entrée jusqu'à ce que le modèle à tester 35 effectue une erreur de classement de la donnée modifiée. Dans cet exemple, l'indicateur de vulnérabilité est le nombre d'itération du modèle d'attaque 40 avant que le modèle à tester 35 effectue l'erreur de classement. Préférentiellement, l'indicateur de vulnérabilité est accompagné d'exemple(s) de donnée(s) d'entrée ayant réussi à attaquer le modèle à tester 35

En outre ou en alternative, si au moins un indicateur quantifiant la robustesse est l'indicateur de précision du modèle à tester 35, l'unité de traitement 30 est propre à obtenir en outre la base de données 45 depuis l'unité de stockage 25.

L'unité de traitement 30 est ensuite préférentiellement propre à sélectionner, parmi les données de la base de données 45, un premier sous-ensemble de données comprenant uniquement des données associées à une des N classes du modèle à tester 35. L'unité de traitement 30 est ensuite propre à appliquer le modèle à tester 35 à chaque donnée du premier sous-ensemble de données. L'indicateur de précision est alors le pourcentage de données que le modèle à tester 35 a correctement classé parmi les N classes, i.e. que le modèle à tester a classé dans la même des N classes que celle associée à la donnée d'entrée dans la base de données 45.

En outre ou en alternative, si au moins un indicateur quantifiant la robustesse est l'indicateur de confiance dans la classification du modèle à tester 35, l'unité de traitement 30 est propre à obtenir en outre la base de données 45 et le modèle d'évaluation 50, depuis l'unité de stockage 25.

L'unité de traitement 30 est ensuite préférentiellement propre à sélectionner, parmi les données de la base de données 45, un premier sous-ensemble de données comprenant uniquement des données associées à une des N classes du modèle à tester 35. L'unité de traitement 30 est ensuite propre à appliquer le modèle à tester 35 à chaque donnée du premier sous-ensemble de données conjointement au modèle d'évaluation 50, pour obtenir pour chaque donnée, une classe déterminée par le modèle à tester 35 et une valeur de confiance dans la classification. L'indicateur de confiance dans la classification est alors le pourcentage de données que le modèle à tester 35 a correctement classé avec une valeur de confiance supérieure à un seuil de confiance prédéfini.

Préférentiellement si les indicateurs quantifiant la robustesse comprennent l'indicateur de précision et l'indicateur de confiance, l'unité de traitement 30 est propre à évaluer ces deux indicateurs simultanément.

En outre, si au moins un indicateur quantifiant la robustesse est l'indicateur de traitement des données OOD par le modèle à tester 35, l'unité de traitement 30 est propre à obtenir en outre la base de données 45 et le modèle d'évaluation 50, depuis l'unité de stockage 25.

L'unité de traitement 30 est ensuite préférentiellement propre à sélectionner, parmi les données de la base de données 45, un deuxième sous-ensemble de données comprenant des données OOD, i.e. des données dont la classe associée ne fait pas parti des N classes du modèle à tester 35.

L'unité de traitement 30 est ensuite propre à appliquer le modèle à tester 35 à chaque donnée du deuxième sous-ensemble de données conjointement au modèle d'évaluation 50, pour obtenir pour chaque donnée OOD, une classe déterminée par le modèle à tester 35 et une valeur de confiance dans la classification. L'indicateur de traitement des données OOD par le modèle à tester 35 étant alors le pourcentage de données OOD que le modèle à tester 35 a classé dans une des N classes avec une valeur de confiance inférieure à un seuil OOD prédéfini.

L'unité de traitement 30 est ensuite propre à envoyer, au deuxième système externe 20, le ou chaque indicateur quantifiant la robustesse évaluée, préférentiellement sous la forme d"un rapport 55

Préférentiellement, l'unité de traitement 30 est propre à évaluer et à envoyer uniquement le ou les indicateurs quantifiant la robustesse requis dans la requête 37 reçue.

Ainsi, le deuxième système externe 20 est propre à obtenir des informations sur la robustesse du modèle à tester 35 sans pouvoir consulter directement le modèle à tester 35.

Le système informatique 10 est par exemple formé d'une pluralité de serveurs comprenant au moins une mémoire et un processeur associé à la ou chaque mémoire. Par exemple, l'unité de stockage 25 et l'unité de traitement 30 sont réalisés chacun sous forme d'un logiciel, ou d'une brique logicielle, exécutable par le processeur. La ou les mémoires du système informatique 10 sont alors aptes à stocker un logiciel de stockage et un logiciel de traitement. Le ou chaque processeur est alors apte à exécuter le logiciel de stockage et le logiciel de traitement.

En variante non représentée, l'unité de stockage 25 et/ou l'unité de traitement 30 sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Spécifie Integrated Circuit*).

Lorsque le système informatique 10 est réalisé sous forme de logiciels, c'est-à-dire sous forme de programmes d'ordinateur, également appelé ensemble de produits programme d'ordinateur, ils sont en outre aptes à être enregistrés sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Selon un complément facultatif, l'unité de stockage est propre à interagir avec une pluralité de premiers systèmes externes 15, dans lequel chaque premier système externe 15 est propre à fournir un modèle à tester 35 respectif ou une partie de modèle à tester. L'unité de stockage 15 est alors propre à stocker chaque modèle à tester 35 et la requête 37 émise par le deuxième système externe 20 précise, celui, parmi les modèles à tester stockés, pour lequel le ou les indicateurs quantifiant la robustesse doivent être évalués.

En alternative ou en complément l'unité de stockage 25, et/ou éventuellement les premier 15 et deuxième 20 systèmes externes, utilise(nt) également des conteneurs tels que décrit précédemment pour l'unité de traitement 30.

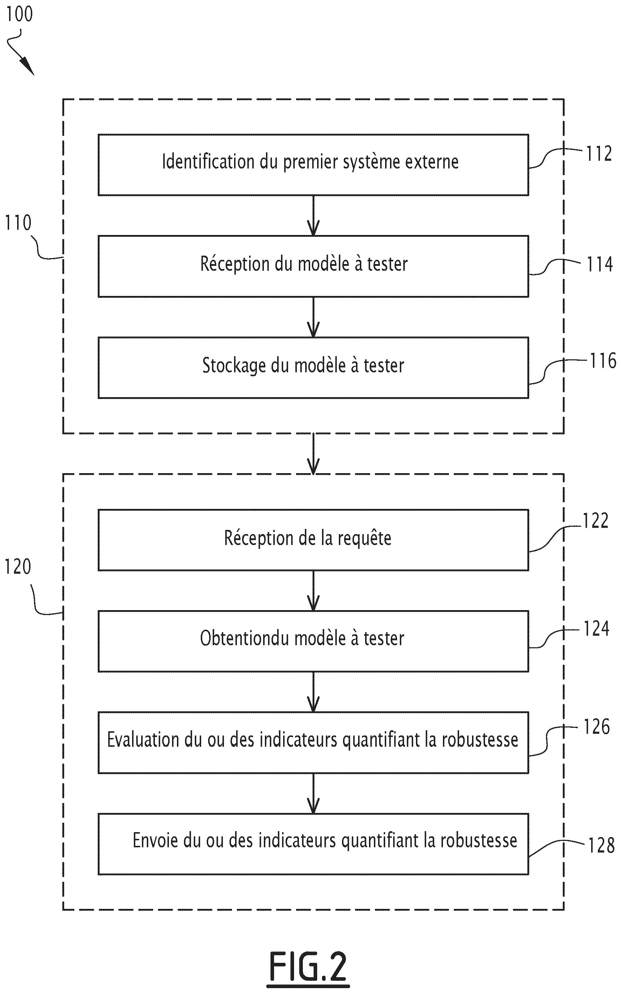

Le fonctionnement du système informatique 10 va maintenant être décrit via un procédé 100 d'utilisation dudit système 10 et en référence à la figure 2 illustrant un organigramme du procédé 100 de mise en oeuvre du système 10.

Initialement, l'unité de stockage 15 stocke le modèle d'attaque 40, la base de données 45, et le modèle d'évaluation 50.

Le procédé comprend une phase de stockage 110 et une phase de traitement 120.

Optionnellement, la phase de stockage 110 comprend une étape 112 d'identification au cours de laquelle l'utilisateur du premier système externe 15 s'identifie auprès de l'unité de stockage 25. A cet effet, l'unité de stockage 25 reçoit par exemple une combinaison : identifiant/mot de passe, depuis le premier système externe 15 et identifie le premier système externe 15 comme autorisé à fournir un modèle à tester 35 respectif ou à mettre à jour un modèle à tester 35 respectif déjà stocké dans l'unité de stockage 25.

La phase de stockage 110 comprend ensuite une étape 114 de réception du modèle à tester 35 ou d'une mise à jour du modèle à tester 35, depuis le premier système externe 15.

La phase de stockage 110 comprend ensuite une étape 116 de stockage du modèle à tester 35 ou de la mise à jour du modèle à tester 35, reçu depuis le premier système externe 15, dans l'unité de stockage 25.

Préférentiellement, la phase de stockage 110 est réitéré pour une pluralité de premiers systèmes externes 15.

A un instant, l'utilisateur du deuxième système externe 20 souhaite évaluer la robustesse du ou d'un des modèles à tester stockés dans l'unité de stockage.

Le procédé 100 comprend alors la phase de traitement 120.

La phase de traitement 120 comprend une étape 122 de réception de la requête 37 d'évaluation de la robustesse du ou d'un des modèles à tester.

Préférentiellement, la requête 37 précise les indicateurs que l'utilisateur du deuxième système externe 20 souhaite être évalués.

La phase de traitement 120 comprend préférentiellement une étape 124 d'obtention du modèle à tester 35, depuis l'unité de stockage 25, et éventuellement, du modèle d'attaque 40, de la base de données 45 et/ou du modèle d'évaluation 50 de la confiance dans la classification en fonction des indicateurs précisés dans la requête 37.

La phase de traitement 120 comprend en outre une étape 126 d'évaluation d'au moins un indicateur quantifiant la robustesse, en fonction des indicateurs demandés dans la requête 37.

A cet effet, l'unité de traitement 30 évalue le cas échéant, l'indicateur de vulnérabilité à partir du modèle à tester 35 et du modèle d'attaque 40, comme décrit précédemment.

A cet effet également et le cas échéant, l'unité de traitement 30 évalue l'indicateur de précision, à partir du modèle à tester 35 et de la base de données 45, comme décrit précédemment, i.e. à partir des données d'entrée de la base de données 45 associées à une des N classes du modèle à tester 35.

A cet effet également et le cas échéant, l'unité de traitement 30 évalue l'indicateur de confiance dans la classification par le modèle à tester 35, à partir du modèle à tester 35, de la base de données 45 et du modèle d'évaluation 50 de la confiance dans la classification, comme décrit précédemment, i.e. à partir des données d'entrée de la base de données 45 associées à une des N classes du modèle à tester 35.

A cet effet également et le cas échéant, l'unité de traitement 30 évalue l'indicateur de traitement des données OOD par le modèle à tester 35, à partir du modèle à tester 35, de la base de données 45 et du modèle d'évaluation 50 de la confiance dans la classification, comme décrit précédemment, i.e. à partir des données OOD.

La phase de traitement 120 comprend ensuite une étape 128 d'envoi au deuxième système externe 20, du ou des indicateurs quantifiant la robustesse, évalués lors de l'étape d'évaluation 126, préférentiellement sous la forme du rapport 55

Le système 10 et le procédé 100 selon l'invention, permettent à n'importe quel acteur de la chaîne de développement et d'utilisation d'un modèle d'intelligence artificiel, d'avoir accès à des informations concernant la robustesse dudit modèle, et notamment savoir s'il peut avoir confiance dans le modèle pour l'utilisation qu'il en fait. En outre, la séparation entre l'unité de stockage 25 et l'unité de traitement 30 assure que les informations du modèle, tel que ses paramètres réglables ou sa structure, ne sont pas communiqués au deuxième dispositif externe 30, garantissant alors la sécurité du modèle.

## Revendications

1. Système informatique (10) comprenant :
- une unité de stockage (25) propre à recevoir, depuis un premier système externe (15), un modèle d'intelligence artificielle, dit modèle à tester (35), et propre à stocker le modèle à tester (35),
le modèle à tester (35) étant un modèle de classification propre à classer une donnée d'entrée parmi une pluralité de classes distinctes,
- une unité de traitement (30) propre à recevoir, depuis un deuxième système externe (25), une requête (37) d'évaluation de la robustesse du modèle à tester (35),
l'unité de traitement (30) étant propre à évaluer au moins un indicateur quantifiant la robustesse du modèle à tester (35), et à envoyer, au deuxième système externe (30) le ou chaque indicateur quantifiant la robustesse évaluée,
l'unité de stockage (25) et l'unité de traitement (30) étant distinctes.

2. Système informatique (10) selon la revendication 1, dans lequel l'unité de traitement (30) est propre à fournir, au deuxième système externe (20), uniquement le ou les indicateurs quantifiant la robustesse évaluée.

3. Système informatique (10) selon la revendication 1 ou 2, dans lequel l'unité de stockage (25) stocke en outre un modèle d'attaque (40) destiné à altérer la classification du modèle à tester (35),
le ou au moins un indicateur quantifiant la robustesse du modèle à tester (35) étant un nombre d'itération nécessaire au modèle d'attaque (40) pour altérer la classification du modèle à tester (35).

4. Système informatique (10) selon l'une quelconque des revendications précédentes, dans lequel l'unité de stockage (25) stocke un modèle d'évaluation (50) d'une valeur de confiance avec laquelle le modèle à tester (35) classe la ou chaque donnée d'entrée qu'il est propre à classer,
et dans lequel l'unité de stockage (25) stocke en outre une base de données (45), la base de données (45) comprenant des données d'entrée destinées à être fournies au modèle à tester (35) et, pour chaque données d'entrée, une classe associée,
le ou au moins un indicateur quantifiant la robustesse du modèle à tester (35) étant un pourcentage de données de la base de données (45) pour laquelle la valeur de confiance évaluée par la modèle de confiance est inférieure à un seuil prédéfini, dit seuil de confiance.

5. Système informatique (10) selon l'une quelconque des revendications précédentes, dans lequel l'unité de stockage (25) stocke en outre une base de données (45), la base de données (45) comprenant des données d'entrée destinées à être fournit au modèle à tester (35) et, pour chaque données d'entrée, une classe associée,
au moins une partie des données de la base de données (45), dites données en dehors de la distribution, étant associées à une classe distincte des classes que le modèle à tester (35) est propre à déterminer,
le ou au moins un indicateur quantifiant la robustesse du modèle à tester (35) étant un pourcentage de données en dehors de la distribution classées par le modèle à tester (35) dans une classe respective avec une valeur de confiance supérieure à un seuil prédéfini, dit seuil OOD.

6. Système informatique (10) selon l'une quelconque des revendications précédentes, dans lequel l'unité de traitement (30) est propre à, suite à la réception de la requête (37) depuis le deuxième système externe (20), obtenir le modèle à tester (35) depuis l'unité de stockage (25),
l'unité de traitement (30) est propre à ensuite évaluer le ou chaque indicateur quantifiant la robustesse du modèle à tester (35) par application d'un traitement au modèle à tester (35).

7. Système informatique (10) selon la revendication précédente, dans lequel le modèle à tester (35) est un modèle à réseau(x) de neurones comprenant plusieurs couches de neurones, chaque neurones d'une couche étant relié à chaque autre neurones de la couche suivante par une connexion comportant un poids synaptique,
le modèle à tester (35) comprenant en outre des métadonnées,
l'unité de traitement (30) étant, lors de l'obtention du modèle à tester (35), propre à obtenir uniquement les poids synaptiques du modèle à réseau de neurones depuis l'unité de stockage (25).

8. Système informatique (10) selon l'une quelconque des revendications précédentes, dans lequel l'unité de stockage (25) est propre à identifier le premier système externe (10),
l'unité de stockage (25) étant propre à recevoir, depuis le premier système externe (15) et uniquement après identification, un mise à jour du modèle à tester (35),
l'unité de stockage (25) étant propre à stocker la mise à jour du modèle à tester (35).

9. Procédé (100) de mise en oeuvre d'un système informatique (10) selon l'une quelconque des revendications précédentes, comprenant une phase de stockage (110) mise en oeuvre par l'unité de stockage (25) et comportant les étapes suivantes :
- réception (114) du modèle à tester (35) depuis le premier système externe (15),
- stockage (116), dans l'unité de stockage (25) du modèle à tester (35) reçu depuis le premier système externe (15),
le procédé (100) comprenant en outre une phase de traitement (120) mise en oeuvre par l'unité de traitement (30), et comportant les étapes suivantes :
- réception (122) de la requête (37) d'évaluation de la robustesse du modèle à tester (35),
- évaluation (126) d'au moins un indicateur quantifiant la robustesse du modèle à tester (35), et
- envoi (128), au deuxième système externe (20), du ou des indicateurs quantifiant la robustesse évaluées.

10. Ensemble de produits programmes d'ordinateur comprenant des instructions logicielles, qui lorsqu'elles sont exécutés, mettent en oeuvre un procédé (100) selon la revendication précédente.
